# EUROPEAN PATENT APPLICATION

(11) **EP 4 621 722 A1**
(43) Date of publication of application: **24.09.2025**
(21) Application number: 22969021.9
(22) Date of filing: 23.12.2022
(51) Int. Cl.: G06T 17/00

(54) **DISPLAY METHOD AND DEVICE FOR DIGITAL MODEL, AND READABLE MEDIUM AND ELECTRONIC DEVICE**

(71) Applicant: Siemens Aktiengesellschaft, 80333 München (DE)
(72) Inventor: CAO, Dian Song, Beijing 100102 (CN)
(74) Representative: Isarpatent
(86) International application number: PCT/CN2022/141603
(87) International publication number: WO 2024/130734

(57) **Abstract**

The embodiments of the present application mainly relate to the field of model display, and particularly relate to a display method and device for a digital model, and a readable medium and an electronic device. The method comprises: acquiring display rules, wherein the display rules define a plurality of protection levels and a plurality of preset scene names, and each of the plurality of preset scene names displays/hides an associated object under the plurality of protection levels; acquiring protection levels, among the plurality of protection levels, corresponding to objects in a product digital model; acquiring an actual scene name; matching the actual scene name with the display rules, so as to determine a display rule corresponding to the actual scene name; and displaying/hiding the objects of the product digital model according to the display rule corresponding to the actual scene name and the protection levels corresponding to the objects of the product digital model.

## Description

### Technical field

Embodiments of the present application mainly relate to the field of model display, in particular to a display method and device for a digital model, and a readable medium and an electronic device.

### Background art

With the development of extended reality (XR) technology and the rise of metaverse technology, ever more digital assets are being created, and various digital assets often contain a large quantity of technical secrets. "XR technology" refers to a combined real and virtual, human-machine interactive environment that is generated by means of computer technology and wearable devices. XR comprises various forms, such as augmented reality (AR), virtual reality (VR) and mixed reality (MR). The metaverse is a virtual world constructed by humankind using digital technology, and which maps from the real world or transcends the real world and can interact with the real world. However, if various digital assets are used in XR technology and the metaverse, it may pose a risk of divulging relevant technical secrets, in particular when presented to external visitors.

### Summary of the invention

Embodiments of the present invention provide a display method and device for a digital model, and a readable medium and an electronic device, whereby, in different actual scenes, various objects of a product digital model are quickly displayed/hidden, thus protecting relevant technical secrets in the digital model, to prevent unnecessary divulgence. At the same time, large savings are made on engineer time costs and capital costs.

In a first aspect, a display method for a digital model is provided, the display method comprising: acquiring a display rule, wherein the display rule defines multiple protection levels and multiple preset scene names, and each of the multiple preset scene names respectively displays/hides an associated object under the multiple protection levels; acquiring the protection levels in the multiple protection levels that correspond to the respective objects in the product digital model; acquiring an actual scene name; by means of matching the actual scene name in the display rule, determining a display rule corresponding to the actual scene name; and according to the display rule corresponding to the actual scene name and the protection levels corresponding to the respective objects of the product digital model, displaying/hiding the respective objects of the product digital model.

In a second aspect, a display device for a digital model is provided, the display device comprising: a receiving module, which is configured to: receive a display rule, wherein the display rule defines multiple protection levels and multiple preset scene names, and each of the multiple preset scene names respectively displays/hides an associated object under the multiple protection levels; and receive the product digital model, the product digital model comprising the protection levels in the multiple protection levels that correspond to the respective objects thereof; an acquiring module, which is configured to: acquire an actual scene name; a determining module, which is configured to: by means of matching the actual scene name in the display rule, determine a display rule corresponding to the actual scene name; and a control module, which is configured to: according to the display rule corresponding to the actual scene name and the protection levels corresponding to the respective objects of the product digital model, display/hide the respective objects of the product digital model.

In a third aspect, an electronic device is provided, comprising: at least one memory, which is configured to store a computer readable code; and at least one processor, which is configured to call the computer readable code, for executing the steps in the method provided by the first aspect.

In a fourth aspect, a computer readable medium is provided, a computer readable instruction being stored on the computer readable medium, and, when the computer readable instruction is executed by the processor, it causing the processor to execute the steps in the method provided by the first aspect.

### Brief description of the drawings

The following drawings are only intended to schematically illustrate and explain embodiments of the present application, and do not limit the scope of the embodiments of the present application. In the drawings:
Fig. 1 is a flowchart of a display method for a digital model according to an embodiment of the present application;
Fig. 2 is a schematic drawing of a first preset table according to an embodiment of the present application;
Fig. 3 is a schematic drawing of different degrees for displaying a digital model in different scenes according to an embodiment of the present application;
Fig. 4 is a schematic drawing of a display device for a digital model according to an embodiment of the present application;
Fig. 5 is a schematic drawing of an electronic device according to an embodiment of the present application.

### Key to the figures

100: display method for digital model
101 - 105: method step
40: display device for digital model
41: receiving module
42: acquiring module
43: determining module
44: control module
500: electronic device
501: memory
502: processor

### Particular embodiments

The subject matter described herein is now discussed with reference to exemplary embodiments. It should be understood that these embodiments are discussed merely in order to enable those skilled in the art to better understand and thereby implement the subject matter described herein, without limiting the scope of protection, suitability or examples expounded in the claims. The functions and arrangements of the elements discussed may be changed without departing from the scope of protection of the content of the embodiments of the present application. Various processes or components may be omitted, replaced or added in various examples as required. For example, the method described may be performed in a different order from that described, and various steps may be added, omitted or combined. Furthermore, features described in relation to some examples may also be combined in other examples.

As used herein, the term "comprises" and variants thereof denote open terms, meaning "including but not limited to". The term "based on" means "at least partly based on". The terms "one embodiment" and "an embodiment" mean "at least one embodiment". The term "another embodiment" means "at least one other embodiment". The terms "first", "second", etc. may denote different or identical objects. Other definitions may be included below, either explicit or implicit. Unless clearly indicated in the context, the definition of a term is the same throughout the specification.

Embodiments of the present application are explained in detail below with reference to the accompanying drawings.

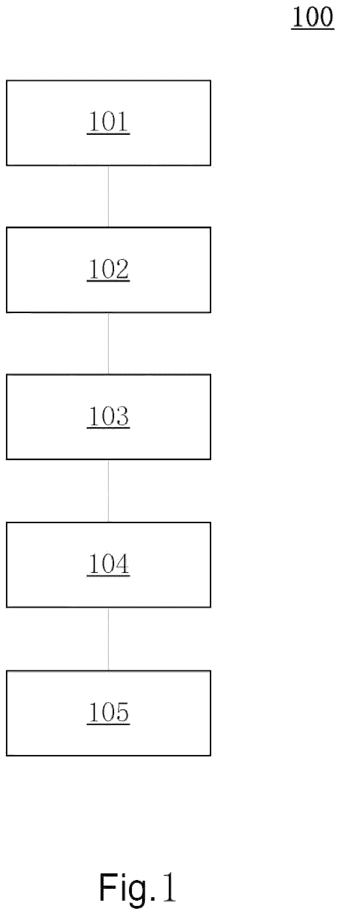

Fig. 1 is a flowchart of a display method for a digital model according to an embodiment of the present application; the display method 100 for a digital model shown in Fig. 1 comprises: Step 101, acquiring a display rule, wherein the display rule defines multiple protection levels and multiple preset scene names, and each of the multiple preset scene names respectively displays/hides an associated object under the multiple protection levels.

In one embodiment, a display rule is updated in a first preset table, wherein in a title row of the first preset table, from left to right, multiple protection levels are respectively ordered according to a preset order, and in a title column of the first preset table, from top to bottom, multiple preset scene names are ordered according to preset order of openness. In addition, cells that correspond to external scene names, i.e. scene names accessible by an external third party, in the preset scene names and a preset number of protection levels ranked in reverse order, for example, excluding the highest protection level, are "hidden", and the other cells are "displayed", for controlling the associated object.

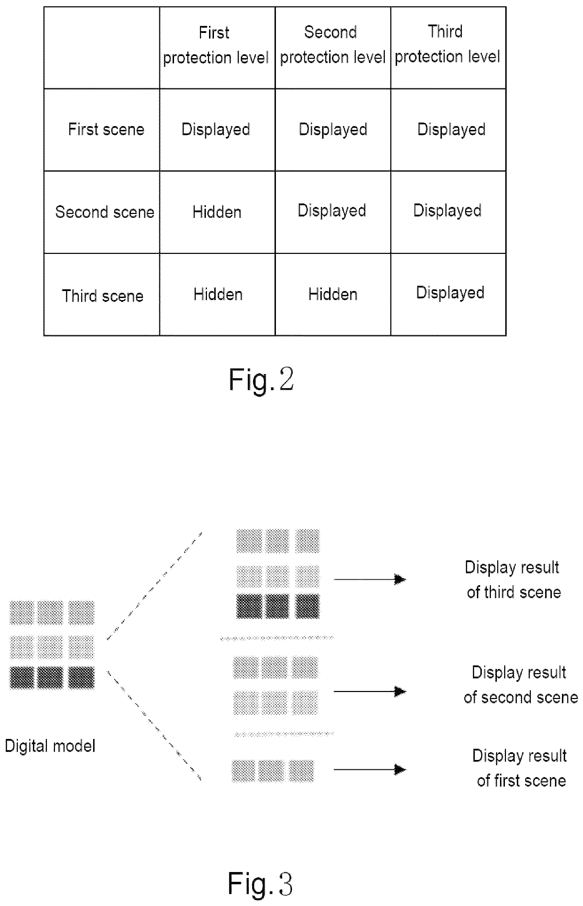

In one embodiment, a display rule is updated in a first preset table, wherein in a title row of the first preset table, from left to right, multiple protection levels are respectively ordered from highest to lowest, and in a title column of the first preset table, from top to bottom, multiple preset scene names are ordered according to openness from highest to lowest. Optionally, all the cells that correspond to the highest protection level are "hidden", and/or the cells that correspond to protection levels excluding the lowest protection level corresponding to external scene names in the preset scene names are "hidden", and other cells by default are "displayed". Optionally, a "displayed" label is listed in all the cells in an upper corner portion to the right of a connecting line from the upper left corner of the table to the lower right corner of the table, including the cells this connecting line passes through, and the remaining cells are all "hidden". In one scene, as shown in Fig. 2, a third protection level, i.e. the lowest protection level, corresponds to "displayed" in every scene; a second protection level corresponds to "displayed" in a first scene and a second scene, and corresponds to "hidden" in a third scene; and a first protection level, i.e. the highest protection level, corresponds to "displayed" in the first scene, and corresponds to "hidden" in the second scene and the third scene.

In one embodiment, multiple protection levels and multiple preset scene names may not necessarily be prestored, rather multiple preset scene names and multiple protection levels input by a user are received, and after respectively ordering from highest to lowest according to the corresponding protection level, a first preset table is updated. In one embodiment, a user may amend and/or add multiple protection levels and preset scene names in a first preset table according to an actual situation. Further, the user may further amend a rule corresponding to "displayed"/"hidden".

Step 102, acquiring the protection levels in the multiple protection levels that correspond to respective objects in a product digital model.

Optionally, by acquiring design description information corresponding to respective objects in the product digital model, protection levels in the multiple protection levels that correspond to the respective objects in the product digital model are acquired, and marked on the respective objects. The design description information comes from sources comprising: a product design document, a product lifecycle management system, or PMI (product and manufacturing information) metadata of the product digital model. Optionally, a user's annotation on a graphical user interface can also be accepted.

Optionally, after step 102, conversion formatting is performed on the product digital model, for an XR device to operate.

Step 103, acquiring an actual scene name.

Optionally, an actual scene name may be obtained by identification with the XR device; or, user input verification information is accepted by means of the XR device to obtain the actual scene name. In one embodiment, an actual scene is determined according to a geographic location of an XR device, such as a location of an internal laboratory, a location of a meeting room of a client company, or an on-site location of an exhibition, etc. In one embodiment, an XR camera can be used to acquire an image, an artificial intelligence method is used for identification, and an actual scene name is judged according to an identification result. In one embodiment, different accounts and passwords can be provided in advance for different scenes, and an actual scene is determined according to the account and password input by a user. Optionally, apart from acquisition by an XR device, an actual scene name may also be acquired by means of a device with a scene positioning capability.

Step 104, by means of matching the actual scene name in the display rule, determining a display rule corresponding to the actual scene name.

Step 105, according to the display rule corresponding to the actual scene name and the protection levels corresponding to the respective objects of the product digital model, displaying/hiding the respective objects of the product digital model.

Optionally, according to the display rule corresponding to the actual scene name and the protection levels corresponding to the respective objects of the product digital model, the XR device displays/hides respective objects of the product digital model to/from a user.

By means of embodiments of the present application, objects of different protection levels in a relevant digital model may be displayed in different actual scenes, and thus relevant technical secrets in a protected digital model are not easily divulged to a third party with no right to such information. By quickly and conveniently switching a display degree of a digital model according to different actual scenes, without needing an engineer to individually create a relevant digital model for each scene, time costs and capital costs are greatly saved on. Whether in a metaverse environment or at an XR technology application level, embodiments of the present application all have a broad application space. Fig. 3 is a schematic drawing of different degrees for displaying a digital model in different scenes according to an embodiment of the present application; as shown in Fig. 3, in different scenes, different objects in different digital models may be displayed. In one embodiment, suppose a digital model for an automobile is provided, then by means of applying the present solution: at an auto show scene, i.e. a first scene, an overall exterior of a digital model may only be displayed; at a 4S shop, i.e. a second scene, a digital model containing exteriors of automobile internal components is displayed; and at an internal laboratory, i.e. a third scene, all objects of the digital model are displayed.

Optionally, after step 105, after receiving a display instruction of a user for a first object in hidden objects in the product digital model, an exterior schematic drawing of the first object is displayed. Thus, a display function in a special scene is realized, such that the solution is more flexible overall.

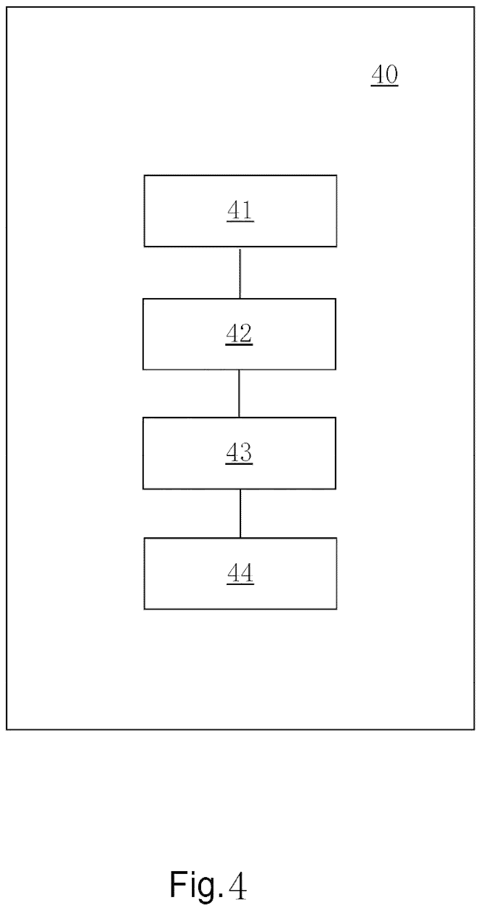

Fig. 4 is a schematic drawing of a display device 40 for a digital model according to an embodiment of the present application; as shown in Fig. 4, the display device 40 for a digital model comprises:
A receiving module 41, which is configured to: receive a display rule, wherein the display rule defines multiple protection levels and multiple preset scene names, and each of the multiple preset scene names respectively displays/hides an associated object under the multiple protection levels; and receive the product digital model, the product digital model comprising the protection levels in the multiple protection levels that correspond to the respective objects thereof.

An acquiring module 42, which is configured to: acquire an actual scene name.

A determining module 43, which is configured to: by means of matching the actual scene name in the display rule, determine a display rule corresponding to the actual scene name.

A control module 44, which is configured to: according to the display rule corresponding to the actual scene name and the protection levels corresponding to the respective objects of the product digital model, display/hide the respective objects of the product digital model.

By means of a display device for a digital model proposed by embodiments of the present application, such as an XR device, objects with different protection levels in a relevant digital model can be displayed in different actual scenes. Thus, relevant technical secrets in a protected digital model are not easily divulged to a third party with no right to such information.

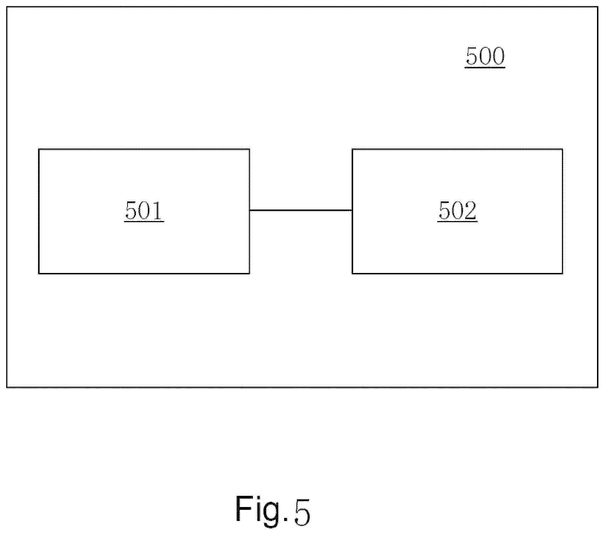

Embodiments of the present application further propose an electronic device 500. Fig. 5 is a schematic drawing of an electronic device 500 according to an embodiment of the present application. As shown in Fig. 5, the electronic device 500 comprises a processor 502 and a memory 501, the memory 501 storing an instruction, wherein when the instruction is executed by the processor 502, the method 100 described above is implemented.

The at least one processor 502 may comprise a microprocessor, an application specific integrated circuit (ASIC), a digital signal processor (DSP), a central processing unit (CPU), a graphics processing unit (GPU), a state machine, etc. Embodiments of computer readable media include, but are not limited to, floppy disks, CD-ROM, magnetic disks, memory chips, ROM, RAM, ASIC, configured processors, all-optical media, all magnetic tapes or other magnetic media, or any other media from which instructions can be read by a computer processor. In addition, various other forms of computer readable media may send or carry instructions to a computer, including a router, dedicated or public network, or other wired and wireless transmission devices or channels. The instructions may include code in any computer programming language, including C, C++, C language, Visual Basic, Java and JavaScript.

In addition, embodiments of the present application may further provide a computer readable medium, a computer readable instruction being stored on the computer readable medium, wherein when the computer readable instruction is executed by a processor, it causes the processor to execute the display method for a digital model described above. Embodiments of the computer readable medium comprise: floppy disks, hard disks, magneto-optical disks, optical disks (such as CD-ROM, CD-R, CD-RW, DVD-ROM, DVD-RAM, DVD-RW, DVD+RW), magnetic tapes, non-volatile memory cards and ROM. Optionally, the computer readable instruction may be downloaded from the cloud or a server computer via a communication network.

It must be explained that not all of the steps and modules in the flows and system structure diagrams above are necessary; certain steps or modules may be omitted according to actual requirements. The order in which steps are executed is not fixed, but may be adjusted as required. The system structures described in the embodiments above may be physical structures, and may also be logical structures, i.e. some modules might be realized by the same physical entity, or some modules might be realized by multiple physical entities, or realized jointly by certain components in multiple independent devices.

## Claims

1. A display method for a digital model, comprising:
- acquiring (101) a display rule, wherein the display rule defines multiple protection levels and multiple preset scene names, and each of the multiple preset scene names respectively displays/hides an associated object under the multiple protection levels;
- acquiring (102) the protection levels in the multiple protection levels that correspond to respective objects in a product digital model;
- acquiring (103) an actual scene name;
- by means of matching the actual scene name in the display rule, determining (104) a display rule corresponding to the actual scene name; and
- according to the display rule corresponding to the actual scene name and the protection levels corresponding to the respective objects of the product digital model, displaying/hiding (105) the respective objects of the product digital model.

2. The method as claimed in claim 1, **characterized in that**, after the step of acquiring (102) the protection levels in the multiple protection levels that correspond to respective objects in a product digital model, the method further comprises:
- performing format conversion on the product digital model, for an XR device to operate.

3. The method as claimed in claim 2, **characterized in that** the step of acquiring (103) an actual scene name comprises:
- obtaining the actual scene name by identification with the XR device; or, accepting user input verification information by means of the XR device to obtain the actual scene name.

4. The method as claimed in claim 2, **characterized in that** the step of displaying/hiding (105) the respective objects of the product digital model, according to the display rule corresponding to the actual scene name and the protection levels corresponding to the respective objects of the product digital model, comprises:
- according to the display rule corresponding to the actual scene name and the protection levels corresponding to the respective objects of the product digital model, the XR device displaying/hiding respective objects of the product digital model to/from a user.

5. The method as claimed in claim 1, **characterized in that** the step of acquiring (102) the protection levels in the multiple protection levels that correspond to respective objects in a product digital model comprises:
- by means of design description information that corresponds to the respective objects in the product digital model, acquiring the protection levels in the multiple protection levels that correspond to the respective objects in the product digital model, wherein the design description information comes from sources comprising: a product design document, a product lifecycle management system, or PMI metadata of the product digital model.

6. The method as claimed in claim 1, **characterized in that**, after the step of displaying/hiding (105) the respective objects of the product digital model, according to the display rule corresponding to the actual scene name and the protection levels corresponding to the respective objects of the product digital model, the method further comprises:
- after receiving a display instruction of a user for a first object in hidden objects in the product digital model, displaying an exterior schematic drawing of the first object.

7. A display device for a digital model, the display device comprising:
- a receiving module (41), which is configured to:
- receive a display rule, wherein the display rule defines multiple protection levels and multiple preset scene names, and each of the multiple preset scene names respectively displays/hides an associated object under the multiple protection levels; and receive the product digital model, the product digital model comprising the protection levels in the multiple protection levels that correspond to the respective objects thereof;
- an acquiring module (42), which is configured to:
- acquire an actual scene name;
- a determining module (43), which is configured to:
- by means of matching the actual scene name in the display rule, determine a display rule corresponding to the actual scene name; and
- a control module (44), which is configured to:
- according to the display rule corresponding to the actual scene name and the protection levels corresponding to the respective objects of the product digital model, display/hide the respective objects of the product digital model.

8. An electronic device, **characterized by** comprising:
at least one memory (501), which is configured to store a computer readable code; and
at least one processor (502), which is configured to call the computer readable code, for executing the steps in the method as claimed in any one of claims 1 - 7.

9. A computer readable medium, **characterized in that** a computer readable instruction is stored on the computer readable medium, and, when the computer readable instruction is executed by the processor, it causes the processor to execute the steps in the method as claimed in any one of claims 1 - 7.
